(19) **Europäisches Patentamt / European Patent Office / Office européen des brevets**

(11) **EP 1 110 135 B1**

(12) **FASCICULE DE BREVET EUROPEEN**

(45) Date de publication et mention
de la délivrance du brevet:
**28.07.2010 Bulletin 2010/30**

(51) Int Cl.:
*G06F 1/02* (2006.01)    *G06F 7/58* (2006.01)
*G06F 7/60* (2006.01)

(21) Numéro de dépôt: **99941736.3**

(22) Date de dépôt: **10.09.1999**

(86) Numéro de dépôt international:
**PCT/FR1999/002160**

(87) Numéro de publication internationale:
**WO 2000/016181 (23.03.2000 Gazette 2000/12)**

(54) **PROCEDE ET DISPOSITIF DE GENERATION D'UN SIGNAL ALEATOIRE ET SYSTEMES DE CONVERSION NUMERIQUE-ANALOGIQUE UTILISANT UN TEL SIGNAL ALEATOIRE**

VERFAHREN UND VORRICHTUNG ZUR GENERATION EINES ZUFALLSSIGNALS UND EIN SOLCHES ZUFALLSSIGNAL BENUTZENDE DIGITAL-ANALOGWANDLERSYSTEME

METHOD AND DEVICE FOR GENERATING A RANDOM SIGNAL AND DIGITAL-TO-ANALOG CONVERTING SYSTEMS USING SAME

(84) Etats contractants désignés:
**DE FR GB IT NL SE**

(30) Priorité: **11.09.1998 FR 9811351**

(43) Date de publication de la demande:
**27.06.2001 Bulletin 2001/26**

(73) Titulaire: **Thales**
**75008 Paris (FR)**

(72) Inventeurs:
 • **GABET, Pascal,**
 **Thomson-CSF Prop. Intel.**
 **94117 Arcueil Cedex (FR)**
 • **DE GOUY, Jean-Luc,**
 **Thomson-CSF Prop. Intel.**
 **94117 Arcueil Cedex (FR)**

(74) Mandataire: **Lucas, Laurent Jacques et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
 **EP-A- 0 225 641    US-A- 3 877 022**

 • **PATENT ABSTRACTS OF JAPAN vol. 007, no. 264 (E-212), 24 novembre 1983 (1983-11-24) & JP 58 147226 A (SHIMAZU SEISAKUSHO KK), 2 septembre 1983 (1983-09-02)**
 • **PATENT ABSTRACTS OF JAPAN vol. 007, no. 090 (P-191), 14 avril 1983 (1983-04-14) & JP 58 016345 A (HITACHI DENSHI KK), 31 janvier 1983 (1983-01-31)**

**Description**

La présente invention concerne un procédé et un dispositif de génération d'un signal aléatoire. L'invention s'applique notamment au domaine de la conversion numérique-analogique et au domaine de la conversion analogique-numérique. A cet effet, l'invention concerne aussi un système de conversion numérique-analogique utilisant un tel signal aléatoire. Elle s'applique notamment pour la synthèse numérique directe de fréquence, par exemple dans le domaine des techniques radar ou dans celui de l'instrumentation.

Les dispositifs de conversion, qu'ils soient numérique-analogique ou analogique-numérique sont très largement utilisés dans de nombreux systèmes et leurs performances constituent généralement un point critique de ces derniers, comme l'illustre par exemple la synthèse numérique directe.

La synthèse numérique directe est une technique de synthèse de fréquence qui consiste à élaborer en valeurs numériques les échantillons d'un signal que l'on veut générer et à convertir ces échantillons en signaux analogiques grâce à un convertisseur numérique-analogique. Les synthétiseurs de signaux obtenus par cette technique sont très attractifs en ce qui concerne leur volume, leurs poids et leur consommation d'énergie car ils peuvent bénéficier d'une intégration importante. Leurs autres avantages sont notamment une très grande résolution et des temps de commutation très faibles d'une fréquence à l'autre. Cependant, le passage d'un signal utile dans le convertisseur numérique-analogique s'accompagne de la création de signaux parasites qui sont dus aux non-linéarités de ces convertisseurs. Ces non-linéarités désignent le fait que les marches d'escalier de la fonction de transfert du convertisseur numérique-analogique ne sont pas d'égales hauteurs et que la transition entre marches produit des phénomènes irréguliers.

Le même problème se retrouve dans des applications à base de convertisseurs analogique-numérique où le passage des signaux dans ces convertisseurs s'accompagne ici aussi de la création de signaux parasites dus aux non-linéarités.

Un document EP-A-0 225 641 divulgue un convertisseur analogique-numérique où un bruit aléatoire est ajouté à un signal utile.

Il est connu que l'ajout au signal utile d'un signal aléatoire avant le passage dans le convertisseur permet de réduire le niveau des signaux parasites en réduisant l'effet des non-linéarités du convertisseur évoquées précédemment. Ce signal aléatoire est appelé communément par le terme anglo-saxon « dither ». Le signal utile est généralement à bande limitée et la fréquence d'horloge du système, par exemple un synthétiseur numérique, est généralement supérieure à cette bande. Cela laisse un espace spectral vide pour placer le signal aléatoire.

Pour être pleinement efficace, ce signal aléatoire doit posséder certaines caractéristiques. Tout d'abord, son spectre doit être maîtrisé pour que celui-ci n'empiète pas dans la bande des signaux utiles. En second lieu, il apparaît que la qualité de la linéarisation des convertisseurs dépend de l'histogramme des amplitudes temporelles du signal aléatoire. Par exemple, une loi gaussienne produit une moins bonne linéarisation qu'une loi rectangulaire. Il y a donc un réel avantage à pouvoir maîtriser, pour le signal aléatoire, à la fois le spectre et l'histogramme.

Le document PATENT ABSTRACTS OF JAPAN vol. 007, no. 264 (E-212), 24 novembre 1983 (1983-11-24) & JP 58 147226 A (SHIMAZU SEISAKUSHO KK), 2 septembre 1983 (1983-09-02) décrit une méthode pour convertir un nombre aléatoire avec une distribution de fréquences connues en une distribution de fréquences donnée et pour obtenir un signal aléatoire à partir de ce nombre aléatoire converti.

Des méthodes sont connues pour obtenir un signal aléatoire avec une enveloppe spectrale donnée. Des méthodes sont aussi connues pour obtenir un signal aléatoire avec une loi de distribution des amplitudes donnée. Ces méthodes sont notamment décrites dans les ouvrages traitant du calcul des probabilités comme par exemple l'ouvrage intitulé « Simulation déterministe du hasard » de J.Maurin aux éditions Masson. Aucune méthode n'est en revanche connue permettant de construire un signal aléatoire quand on impose simultanément l'enveloppe spectrale et la loi de distribution des amplitudes.

Le but de l'invention est notamment de permettre la construction d'un signal aléatoire lorsque les deux paramètres précédents lui sont imposés, c'est-à-dire :

   o l'enveloppe spectrale du signal, qui est en fait le module de la transformée de Fourier de sa fonction d'autocorrélation ;
   o la loi de distribution des amplitudes temporelles, qui sera nommée histogramme des amplitudes par la suite.

A cet effet, l'invention a pour objet un procédé de génération d'un signal aléatoire tel que défini dans la revendication 1.

L'invention a également pour objet un dispositif, tel que défini dans la revendication 10, pour la mise en oeuvre du procédé précité et un système de conversion numérique-analogique, tel que défini dans la revendication 14, comportant ledit dispositif.

L'invention a pour principaux avantages qu'elle permet d'améliorer la linéarité des convertisseurs analogique-numérique ou numérique-analogique, qu'elle peut s'appliquer à de nombreux systèmes, qu'elle est économique et qu'elle est simple à mettre en oeuvre.

D'autres caractéristiques et avantages de l'invention apparaîtront à l'aide de la description qui suit, faite en regard de dessins annexés qui représentent :

- la figure 1, une illustration des étapes possibles du procédé selon l'invention ;
- la figure 2a, une illustration d'une troisième étape possible du procédé selon l'invention ;
- la figure 2b, un histogramme en sortie de la deuxième étape du procédé selon l'invention ;
- la figure 2d, un histogramme en sortie de la quatrième étape du procédé selon l'invention, après application d'une fonction non-linéaire et filtrage ;
- la figure 2f, un histogramme en sortie de la quatrième étape précédente après avoir réinjecté le signal de sortie de cette étape à l'entrée de la troisième étape ;

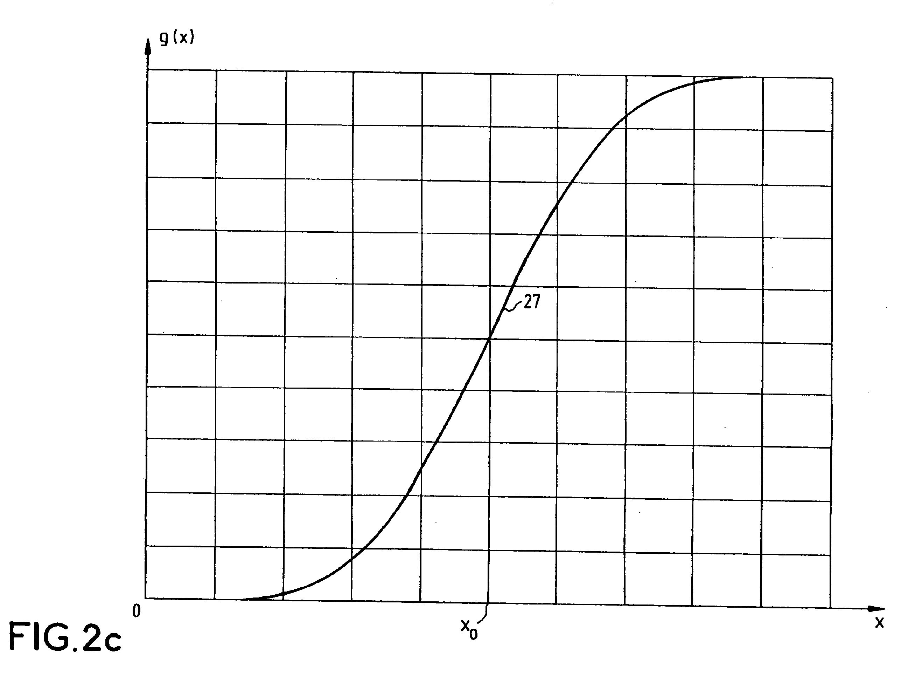

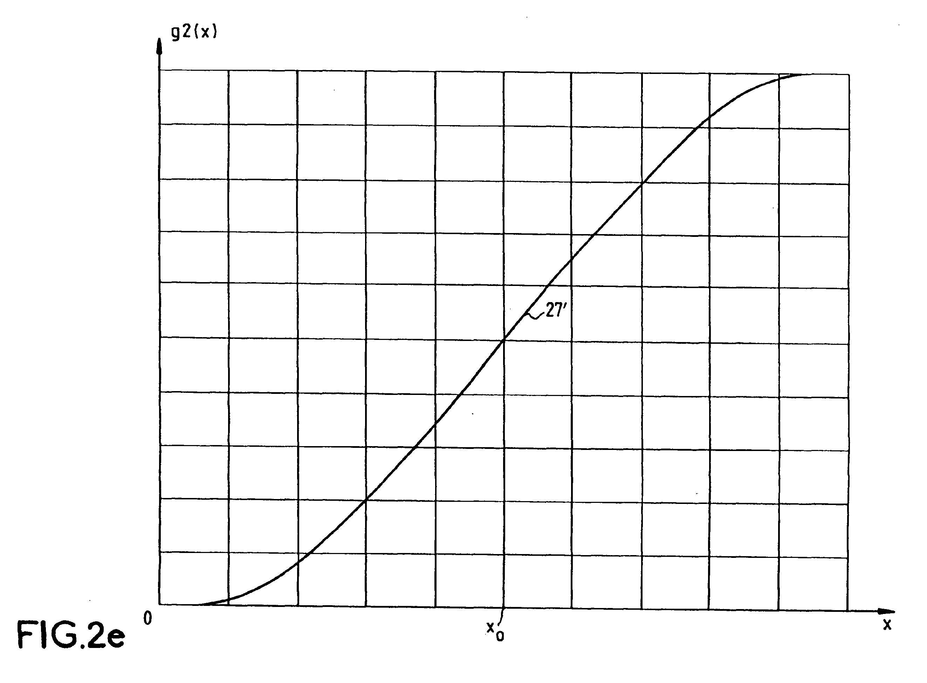

- les figures 2c et 2e, des illustrations de la fonction non-linéaire précitée en fonction des histogrammes précités ;

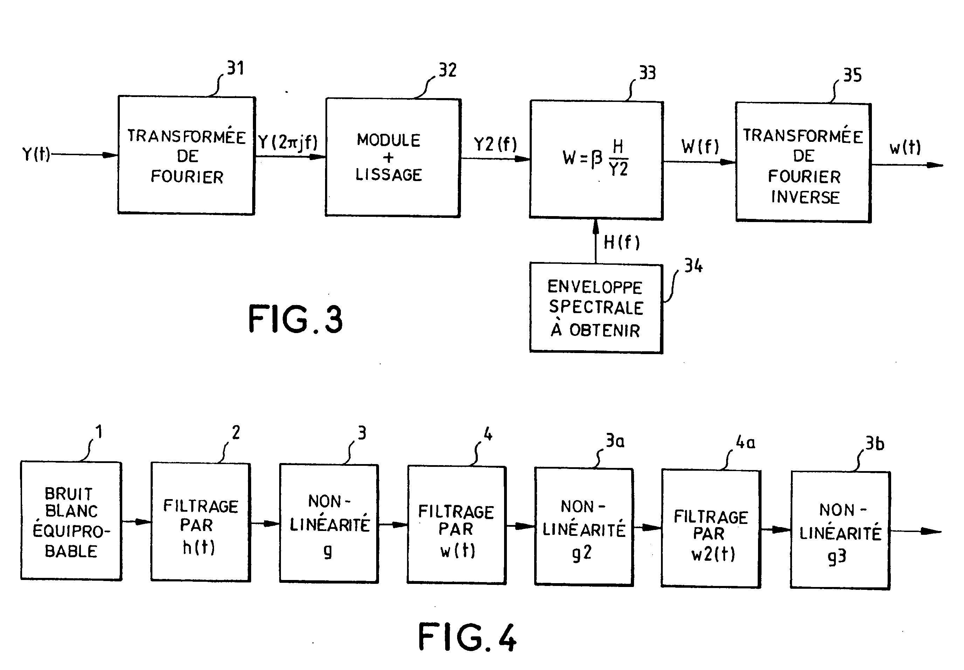

- la figure 3, une illustration d'une quatrième étape possible du procédé selon l'invention ;
- la figure 4, une succession d'étapes possible du procédé selon l'invention, répétant les troisième et quatrième étapes précédentes ;

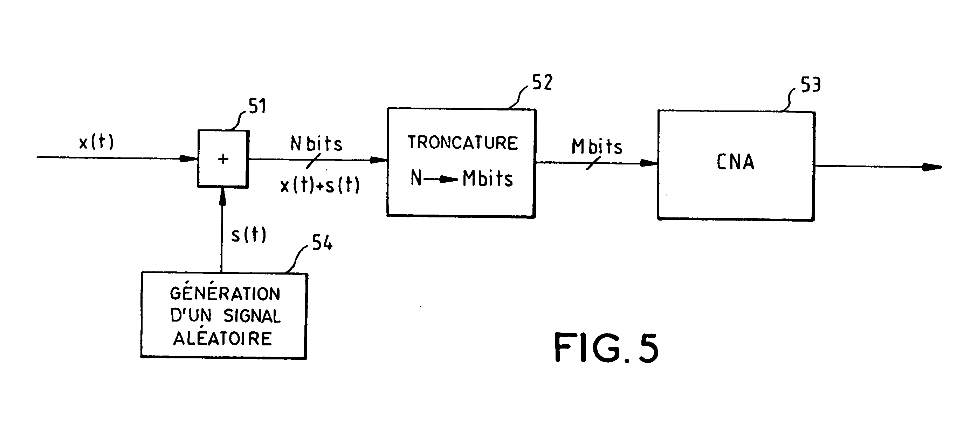

- la figure 5, un mode de réalisation possible d'un système de conversion numérique-analogique utilisant un signal aléatoire généré selon l'invention ;

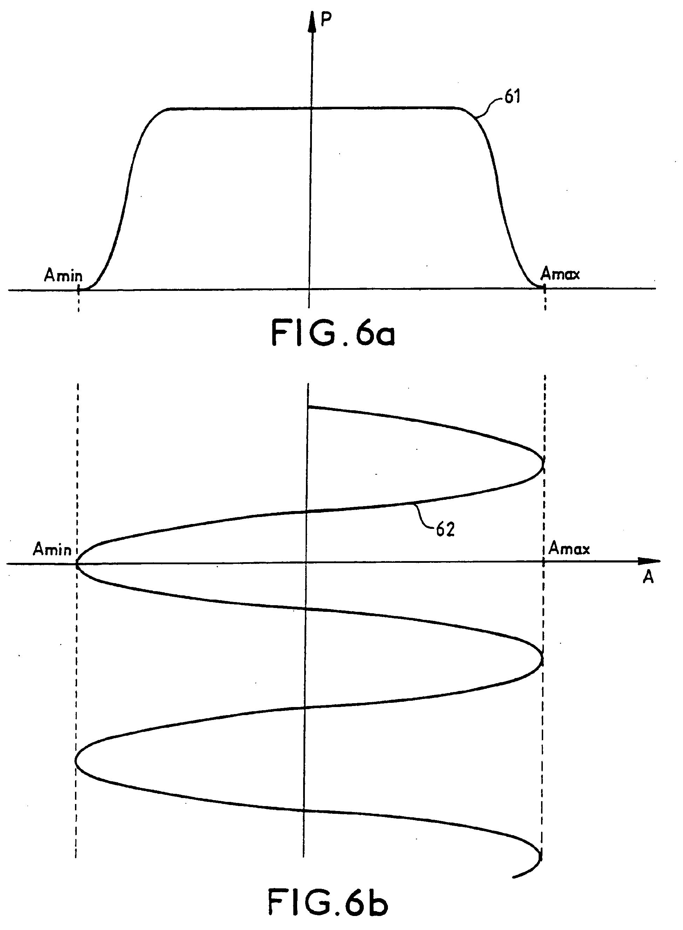

- la figure 6a, un exemple d'histogramme des amplitudes d'un signal aléatoire généré ;
- la figure 6b, un exemple de signal utile d'amplitude voisine du signal aléatoire précité ;

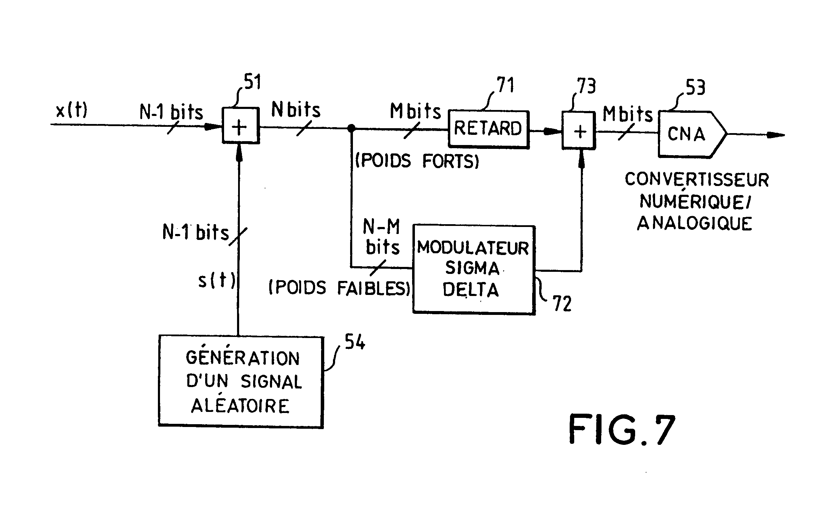

- la figure 7, un mode de réalisation possible d'un système de conversion numérique-analogique utilisant un signal aléatoire généré selon l'invention supprimant en outre les erreurs de troncature dans la bande des signaux utiles ;

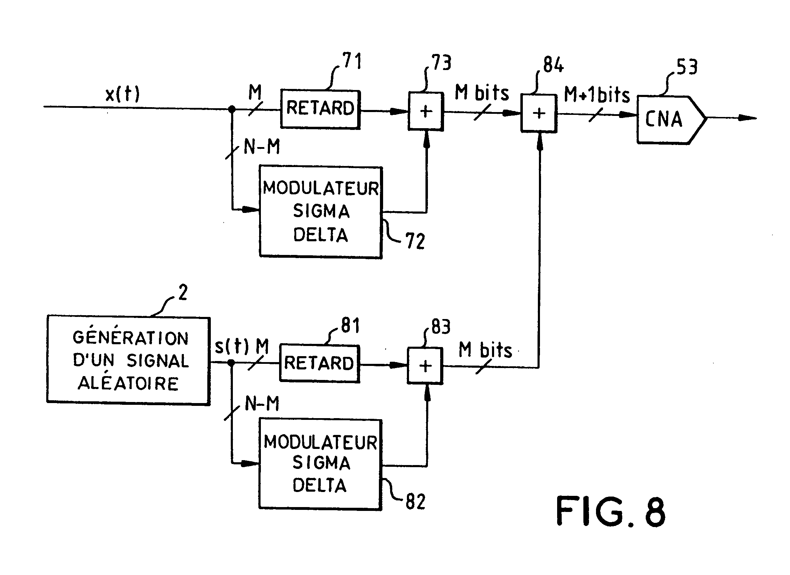

- la figure 8, une variante de réalisation du système selon la figure 7 ;

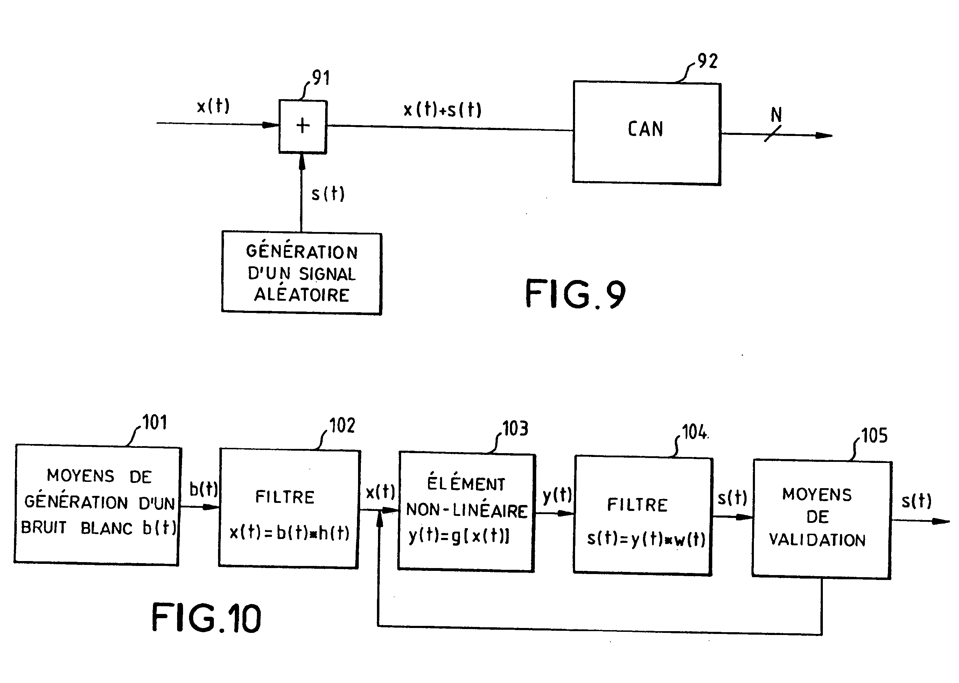

- la figure 9, un exemple de système de conversion analogique-numérique utilisant un signal aléatoire généré selon l'invention.
- la figure 10, un exemple de réalisation de dispositif pour la mise en oeuvre du procédé selon l'invention.

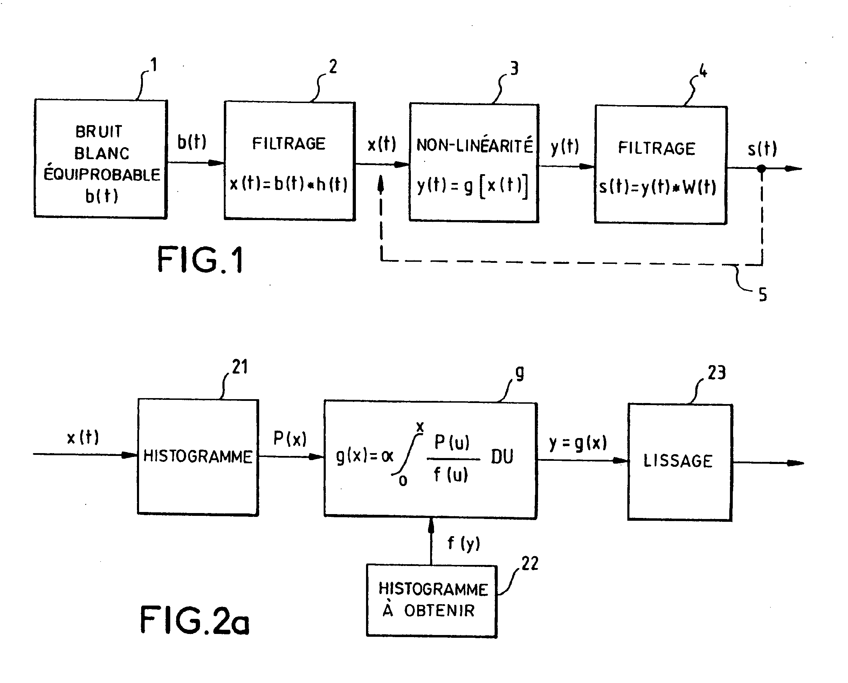

La figure 1 illustre les étapes possibles d'un procédé selon l'invention. Ce dernier est notamment composé d'une suite d'étapes ou d'opérations de traitement du signal dont la répétition éventuelle d'une partie d'entre elles permet de faire converger les paramètres du signal aléatoire vers des lois désirées. Ces paramètres sont les paramètres précités, c'est-à-dire le spectre et l'histogramme des amplitudes.

Le procédé selon l'invention comporte une première étape 1 dans laquelle un bruit b(t) est élaboré. Ce bruit est par exemple blanc, c'est-à-dire qu'il est à spectre blanc et à histogramme des amplitudes équiprobable. Ce bruit b (t) peut par exemple être réalisé par un générateur pseudo-aléatoire tel que décrit dans l'article intitulé « Génération of pseudo-random sequences for spread spectrum systems » par R.Moser et J.Stover paru dans Microwave Journal Mai 1985. Le bruit élaboré dans la première étape n'est pas nécessairement blanc, il peut s'agir par exemple d'un bruit coloré. L'intérêt du bruit blanc réside cependant dans le fait qu'il est simple à générer.

Dans une deuxième étape 2 du procédé selon l'invention, le bruit b(t) est filtré de façon à obtenir un signal x (t) possédant l'enveloppe spectrale donnée, cette enveloppe spectrale étant définie par la fonction H(f) où f est la fréquence. Cela peut être obtenu par exemple en faisant passer le bruit b(t) dans un filtre qui a pour réponse impulsionnelle la fonction h(t) égale à la transformée de Fourier inverse de la fonction H(f) précédemment définie. En sortie de cette deuxième étape 2, le signal x(t) obtenu possède donc bien la bonne enveloppe spectrale mais son histogramme des amplitudes est proche d'une loi gaussienne. Hors, cette loi n'est notamment pas désirée car elle ne permet pas au signal aléatoire généré de supprimer efficacement l'effet des non-linéarités des convertisseurs, comme cela été évoqué précédemment. Une loi rectangulaire ou presque rectangulaire est à cet effet plus efficace.

Si le bruit b(t) n'est pas blanc par exemple, la réponse du filtre de l'étape 2 doit être modifiée en conséquence. Le rôle du filtre reste notamment le même, c'est-à-dire d'obtenir en sortie de l'étape 2 une enveloppe spectrale égale à H(f).

Dans une troisième étape 3 du procédé selon l'invention, le signal x(t), créé dans l'étape précédente, passe dans un élément non-linéaire décrit par sa fonction de transfert non-linéaire y = g(x). En sortie de cette troisième étape 3, un signal y(t) = g[x(t)] est donc obtenu. La fonction non-linéaire g n'est pas quelconque, elle est définie de façon à ce que le signal y(t) s'approche de l'histogramme des amplitudes souhaité, cet histogramme étant défini par une fonction de y, notée f(y). Cet histogramme sera par la suite considéré, à titre d'exemple, comme étant rectangulaire ou presque.

La figure 2a illustre l'expression de la fonction g de la troisième étape. Cette fonction g est définie d'une part à partir de l'histogramme 21 de x(t), dont la fonction est notée P(x) et d'autre part de l'histogramme à obtenir 22 pour y (t), soit f(y). La fonction g est alors définie selon la relation suivante :

$$y = g(x) = \alpha \int_0^x \frac{P(u)}{f(u)} du \qquad\qquad (1)$$

α étant un coefficient de réglage de l'amplitude fonction de l'amplitude souhaitée pour le signal y(t).

Cette relation (1) montre que la fonction g qui est appliquée à x(t) dépend en fait de cette variable x(t) puisqu'elle dépend de son histogramme P.

L'histogramme P(x) s'obtient par exemple de la façon suivante :

- des intervalles d'égales largeurs sont définis sur l'échelle des amplitudes de x(t) ;
- à chaque intervalle est associé une case de l'histogramme ;
- l'effectif d'une case est augmenté d'une unité à chaque fois que l'amplitude de x(t) est comprise dans l'intervalle correspondant à cette case.

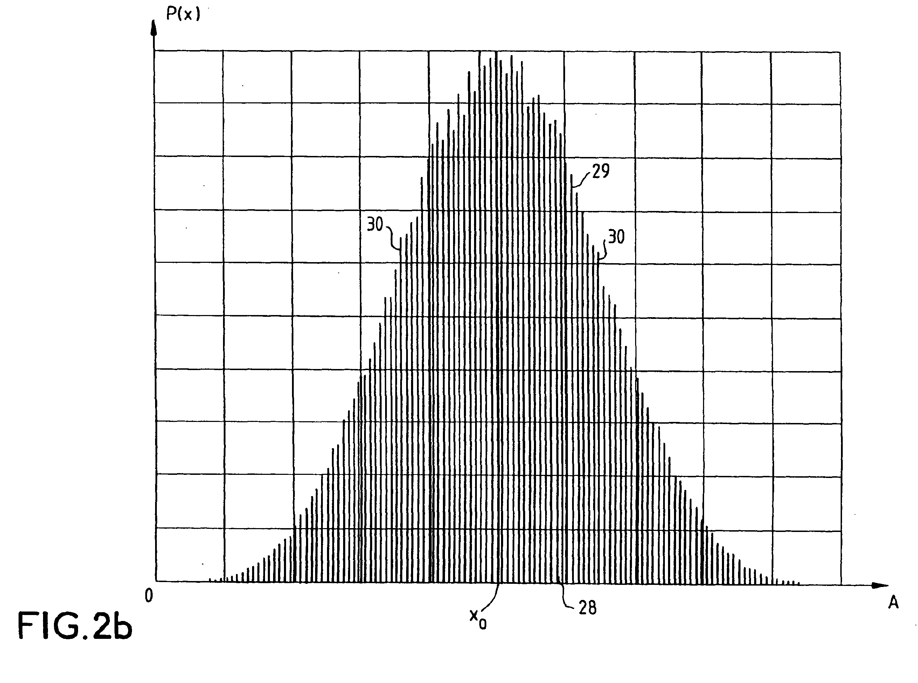

La figure 2b illustre une allure possible de l'histogramme P(x) de la fonction x(t), en sortie de la deuxième étape. Cet histogramme est représenté par des traits verticaux 29 associés chacun à une case 28 de l'histogramme. L'amplitude d'un trait correspond à l'effectif d'une case. L'axe des ordonnées représente les valeurs de l'histogramme P(x) en fonction des amplitudes A de la fonction x(t) représentées sur l'axe des abscisses. L'histogramme P(x) possède une forme sensiblement gaussienne par exemple, centrée sur une valeur $x_0$ de la fonction x(t).

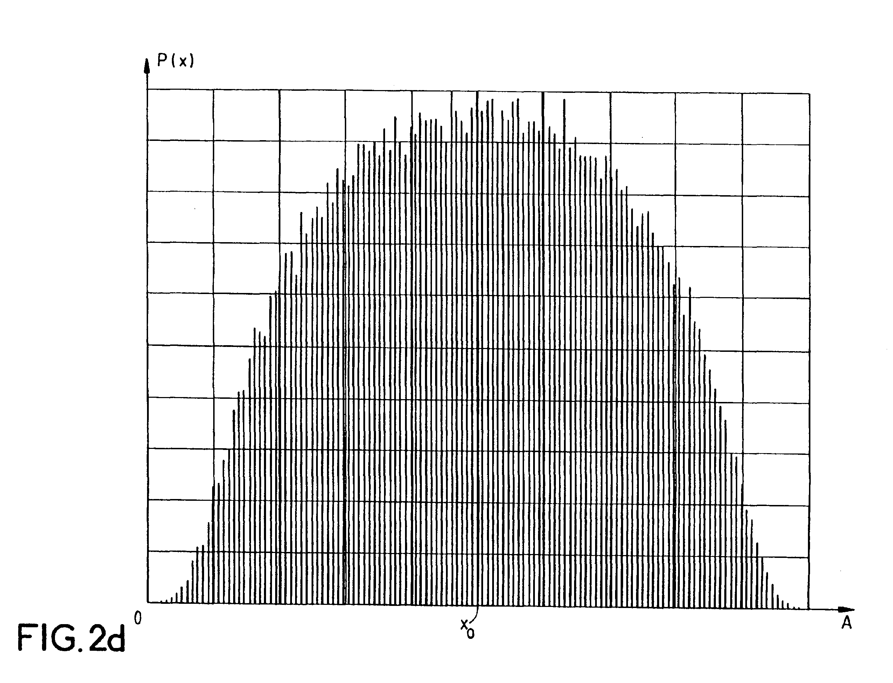

La figure 2c représente par une courbe 27 une allure possible de la fonction non-linéaire g, l'axe des ordonnées représentant les valeurs g(x) de la fonction et l'axe des abscisses représentant les valeurs des amplitudes de x(t). La fonction g est sensiblement linéaire au voisinage de la valeur centrale $x_0$ précitée. A un coefficient éventuel près, ces valeurs sont donc peu affectées par la fonction g. En revanche, les valeurs plus éloignées subissent une plus importante transformation, cela permet notamment de rapprocher l'histogramme P(x) d'une forme carrée. La figure 2d illustre ainsi le rôle de la fonction non-linéaire g. Cette figure illustre en effet l'allure de l'histogramme du signal après la quatrième étape 4, en montrant bien que cet histogramme se rapproche d'une forme carrée. On reviendra par la suite sur cette figure 2d à propos du signal en sortie de l'étape suivante ainsi que d'un éventuel rebouclage sur les troisième 3 et quatrième étapes 4.

L'application de la fonction g est par exemple suivie et/ou précédée d'une fonction de lissage 23. Cette fonction de lissage peut permettre notamment de supprimer de petites ondulations non significatives, par exemple de petites ondulations 30 comme en possède l'histogramme P(x) illustré par la figure 2b. Un lissage est par exemple effectué par une transformée de Fourier, puis par une pondération adaptée et enfin par une transformée de Fourier inverse. Il est à noter que l'intégrale contenue dans la fonction g telle que définie par la relation (1) réalise un lissage, ou presque. Si ce dernier est suffisant, un lissage supplémentaire peut alors ne pas être nécessaire.

En sortie de la troisième étape 3, le signal y(t) possède bien l'histogramme f(y) souhaité, mais ne possède plus l'enveloppe spectrale H(f) souhaitée, car le passage dans la fonction non-linéaire a eu pour conséquence d'enrichir le spectre. En effet, le spectre de y(t) occupe alors une bande de fréquences plus grande que celle définie par la fonction H(f) et avec également des déformations par rapport à cette fonction H(f).

Une quatrième étape 4 du procédé selon l'invention permet de corriger l'enveloppe spectrale de y(t). Pour cela, ce signal y(t) passe dans un filtre de réponse impulsionnelle w(t).

La figure 3 illustre une façon d'obtenir ce filtre w(t) à partir de y(t) et de H(f) qui est l'enveloppe spectrale à obtenir 34. La transformée de Fourier de y(t) est calculée par des moyens de calcul 31 qui donnent en sortie une fonction de la fréquence f, $Y(2\pi j f)$. Des moyens 32 permettent de calculer le module de cette transformée de Fourier et d'obtenir ainsi le module $|Y(2\pi j f)|$ noté $Y_2(f)$. Ces mêmes moyens permettent par exemple de calculer un lissage à appliquer à cette fonction $Y(2\pi f)|$. Comme lors de la troisième étape 3, le lissage peut permettre de supprimer de petites ondulations non significatives. Des moyens de calcul 33 réalisent par la suite la division de H(f) par $Y_2(f)$, soit $H(f) / Y_2(f)$. Le résultat de cette division est par exemple multiplié par un coefficient β qui permet d'obtenir les bonnes valeurs temporelles souhaitées. Ce coefficient β permet notamment de définir l'amplitude du signal de sortie s(t) évoqué par la suite. Cette multiplication peut à cet effet être par exemple réalisé dans le domaine temporel, après application d'une transformée de Fourier inverse. Le résultat de la division $H(f) / Y_2(f)$, est une fonction W(f) dont la transformée de Fourier inverse est déterminée par des moyens de calcul 35, le résultat de cette transformée de Fourier inverse étant la fonction w(t), qui est la réponse impulsionnelle recherchée. Cette réponse impulsionnelle, qui est combinée au signal d'entrée du filtre y(t) par un produit de convolution dépend de ce signal d'entrée y(t). Il est à noter que la multiplication par le coefficient β peut par exemple être réalisée après la division par les moyens de calcul 33.

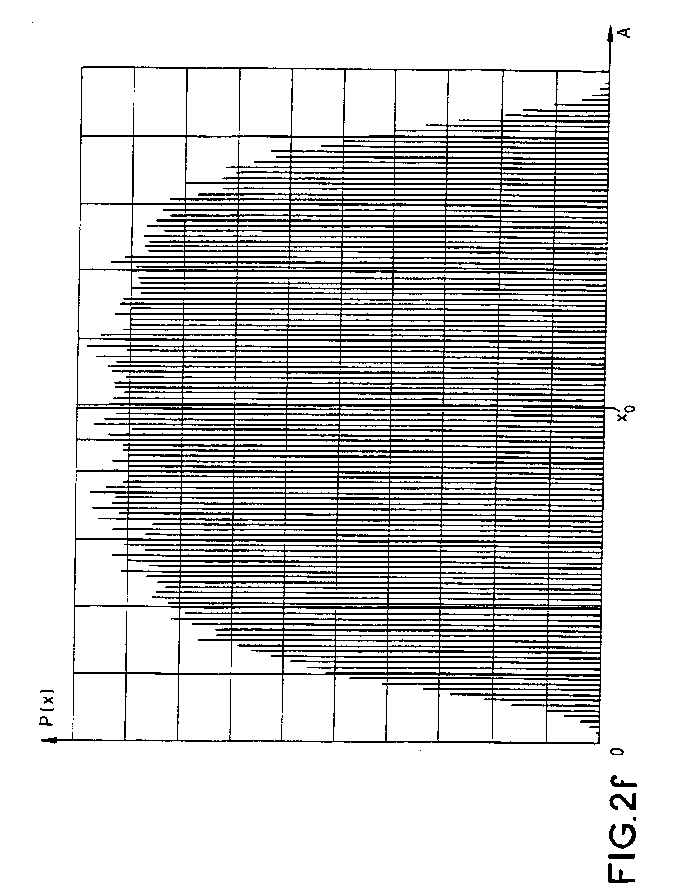

Dans la quatrième étape 4 du procédé selon l'invention, le signal y(t) issu de la troisième étape passe donc dans un filtre de réponse impulsionnelle w(t) dont le résultat s(t) possède l'enveloppe spectrale souhaitée et dont l'histogramme des amplitudes tend vers la fonction souhaitée f. Il est alors possible de répéter l'étape 3 de façon à obtenir une meilleure approximation de l'histogramme, en fait pour affiner la convergence vers l'histogramme f. La figure 4 illustre un exemple où la troisième étape est effectuée trois fois et la quatrième étape est répétée deux fois. Ainsi, en sortie de la quatrième étape 4 qui présente un filtre de réponse impusionnelle w(t), le signal s(t) subit de nouveau la troisième étape 3a, avec une fonction de transfert non-linéaire g2 différente de la précédente g. Cette fonction non-linéaire g2 est illustrée par la courbe 27' de la figure 2e. Cette fonction est définie à partir de l'histogramme P(x) illustré par la figure 2d, qui est l'histogramme du signal de sortie s(t) de la quatrième étape, mais aussi celui du signal d'entrée de la troisième étape 3a répétée. Etant donné que cet histogramme est plus rapproché d'un carré que le précédent, illustré par la figure 2b, la fonction g2 se rapproche plus d'une fonction linéaire, en comparaison de la fonction non-linéaire précédente, illustrée par la figure 2c. L'histogramme du signal en sortie de la quatrième étape 4a répétée est illustré par la figure 2f. Cette figure montre un histogramme P(x) qui se rapproche très nettement d'un carré ou d'un rectangle. Ce signal peut alors être considéré comme acceptable pour une application donnée.

Eventuellement, en cas de nécessité, le signal est ensuite de nouveau traité par la troisième étape 3b. La fonction non-linéaire g et le filtrage w(t) sont différents d'une répétition à l'autre car la fonction non-linéaire est de moins en moins non-linéaire et la correction de l'enveloppe spectrale est de plus en plus faible, du fait que l'enveloppe spectrale et l'histogramme des amplitudes convergent vers les lois souhaitées au fur et à mesure des répétitions. Le nombre de répétitions des troisième et quatrième étapes dépend notamment de la précision avec laquelle on souhaite approcher l'histogramme et l'enveloppe spectrale. Une allure d'histogramme telle qu'illustrée par la figure 2f peut ainsi être tout à fait acceptable.

La répétition peut par exemple se faire en rebouclant le signal s(t) de sortie de la quatrième étape en entrée de la troisième étape, comme l'illustre la boucle 5 de la figure 1. A chaque tour de boucle, une nouvelle fonction non-linéaire g ainsi qu'une nouvelle réponse impulsionnelle w(t) sont recalculées. Le nombre de répétitions de la boucle peut être défini selon différents critères, par exemple :

- le nombre de répétitions est compté, lorsque le nombre de répétions atteint un nombre donné, le signal s(t) est considéré comme définitif et les répétitions sont arrêtées ;
- un critère de convergence peut aussi être utilisé, ce dernier peut être basé par exemple sur l'écart entre les lois obtenues et les lois souhaitées.

La figure 5 illustre l'application du procédé selon l'invention à un système de conversion numérique-analogique, contenu par exemple dans un synthétiseur numérique. Dans cette application, un signal utile x(t), numérique, doit être converti en grandeur analogique avec la meilleure linéarité possible, c'est-à-dire en fait avec le moins de signaux parasites possibles. Ce signal utile x(t) est donc additionné à un signal aléatoire s(t) obtenu selon le procédé selon l'invention par des moyens de génération 54, tels que décrits par la suite par exemple. Les deux signaux x(t) et s(t) sont combinés par un additionneur 51. Ces deux signaux sont numériques. Dans un mode de réalisation préférentiel du système de conversion, le signal aléatoire s(t) a les caractéristiques suivantes :

- une amplitude voisine ou supérieure à celle du signal x(t) ;
- un histogramme proche de la loi équiprobable et ayant une forme presque rectangulaire, ou de préférence, les bords suivent des lois à dérivées continues ;
- une enveloppe spectrale à bande limitée, cette enveloppe étant par exemple rectangulaire.

Les figures 6a et 6b illustrent les deux premières de ces caractéristiques. La figure 6a présente une première courbe 61 qui représente en ordonnée la probabilité P que l'amplitude du bruit soit comprise dans un intervalle donné [A, A+dA]. A cet effet, l'axe des ordonnées représente la probabilité P et l'axe des abscisses l'amplitude du bruit. L'amplitude du bruit est comprise entre une valeur $A_{min}$ et une valeur $A_{max}$ définissant un intervalle [$A_{min}$, $A_{max}$]. Ces valeurs sont sensiblement égales ou voisines des amplitudes minimum et maximum d'un signal utile, représenté par ailleurs par une courbe 62 en figure 6b, évoluant entre les valeurs $A_{min}$ et $A_{max}$. La probabilité P du bruit est sensiblement constante sur l'intervalle compris entre ces valeurs $A_{min}$ et $A_{max}$. La densité de probabilité du bruit est donc sensiblement égale à une loi de densité équiprobable. Il est à noter que sur la figure 6b le signal utile est représenté comme étant sinusoïdal, mais d'autres formes de signaux utiles sont bien sûr possibles.

Le résultat de l'addition x(t) + s(t) par l'additionneur 51 est supporté par un bus de N bits, le signal utile x(t) et le signal aléatoire s(t) étant codés sur (N-1) bits. Des moyens de troncature 52 font passer ce résultat de N bits à M bits, M étant inférieur à N. Le résultat codé sur M bits est converti en une grandeur analogique par un convertisseur numérique-analogique 53. En l'absence de signal aléatoire, le passage du signal utile dans le convertisseur 53 crée des signaux parasites du fait notamment des non-linéarités du convertisseur. Les non-linéarités désignent le fait que les marches d'escalier de la fonction de transfert du convertisseur numérique-analogique ne sont pas d'égales hauteurs et que la transition entre marches produit des phénomènes irréguliers. Ces non-linéarités entraînent la génération de signaux harmoniques qui sont par ailleurs repliés du fait de l'échantillonnage. Des signaux parasites sont ainsi créés, un signal parasite étant constitué de fréquences différentes de celles composant le signal utile. Les caractéristiques du signal aléatoire s(t) permettent notamment d'empêcher l'énergie correspondant à la non-linéarité de s'organiser en raies discrètes. Par conséquent, l'énergie de non-linéarité s'étale en un plancher de bruit.

L'opération de troncature génère également des signaux parasites repliés par échantillonnage. Les signaux parasites dus au non-linéarités étant pour leur part réduits en un plancher de bruit, il peut être nécessaire aussi de régler le problème de la troncature. La figure 7 présente, par un synoptique, un mode de réalisation d'un système de conversion numérique-analogique où un modulateur sigma-delta est utilisé pour éliminer l'erreur de troncature due au passage de N bits à M bits pour le signal utile x(t). La troncature est par exemple ici réalisée en sortie de l'additionneur 51 qui réalise la somme du signal utile x(t) et du signal aléatoire s(t), ces deux signaux étant codés chacun sur (N-1) bits. Il est bien sûr que s'il y a des non-linéarités, il n'est pas utile de chercher à supprimer les erreurs de troncature, car les signaux parasites de troncature restent noyés dans les autres signaux parasites, notamment ceux dus aux non-linéarités. Mais, dès lors où l'injection d'un signal aléatoire s(t), tel que par exemple décrit précédemment, permet de supprimer les non-linéarités, il devient avantageux d'ajouter, dans un dispositif selon l'invention, un modulateur sigma-delta tel que cela est décrit par la suite, pour supprimer les signaux parasites de troncature.

Le système comporte toujours des moyens 54 de génération du signal aléatoire et un convertisseur numérique-analogique 53 en sortie. Les moyens de génération de signaux aléatoires 54 mettent en oeuvre le procédé selon l'invention, tel que décrit par la suite par exemple. Les défauts dus aux non-linéarités du convertisseur analogique-numérique 53 sont traités par ces moyens de génération 54. Le résultat de l'addition du signal utile x(t) et du signal aléatoire s(t) est codé sur N bits, et on choisit par exemple l'amplitude du signal x(t)+s(t) pour éviter les débordements lors d'une addition 73 dont il sera fait état par la suite. Le bus de N bits en sortie de l'additionneur 51 est divisé en deux parties. Un premier bus comportant les M bits de poids fort entre dans un module de retard 71. Un deuxième bus comportant les N-M bits de poids faible entre dans le modulateur sigma-delta 72. Le module de retard 51 compense le retard introduit par le modulateur sigma-delta pour le traitement des N-M bits de poids faible. La sortie du modulateur sigma-delta 72 est additionnée à la sortie du module à retard 71 par un deuxième additionneur 73. Le résultat de l'addition, codé sur M bits, est converti en signal analogique par le convertisseur numérique-analogique 53. Le signal est notamment codé sur M bits.

La figure 8 présente un autre mode de réalisation possible pour le système de conversion numérique-analogique. Dans ce mode de réalisation, deux modulateurs sigma-delta sont utilisés. Le premier 72 permet de résoudre le problème de la troncature pour le signal utile x(t). Le deuxième résout le problème de troncature pour le système aléatoire s(t). Cet arrangement présente un intérêt dans la mesure où le deuxième modulateur 82 peut dans de nombreux cas être soit supprimé, car l'effet de la troncature du signal aléatoire peut être négligé, soit intégré au processus de génération du signal aléatoire s(t). Il en résulte un gain de matériel. La troncature du signal aléatoire peut dans de nombreux cas être négligée car le spectre associé à cette troncature est situé à un niveau très inférieur à celui du spectre lié à la troncature du signal utile. Ceci est dû au fait que le signal aléatoire et le signal utile ont des énergies voisines. Dans le cas du signal aléatoire, cette énergie se répartit sur un grand nombre de composantes spectrales qui ont donc chacune un niveau très inférieur à la composante spectrale liée au signal utile. Si ces deux signaux ont la même énergie, l'amplitude des raies du signal aléatoire est donc plus faible que celle du signal utile. La troncature du signal aléatoire peut alors être négligée.

Dans ce mode de réalisation de la figure 8, les deux modulateurs sigma-delta 72, 82 sont donc utilisés de façon à éliminer indépendamment les erreurs de troncature sur le signal utile x(t) et les erreurs de troncature sur le signal aléatoire s(t) avant que l'addition de ces deux signaux soit effectuée, le signal utile et le signal de bruit étant tronqués avant cette addition. Le signal utile étant codé sur N bits, son bus est divisé en deux parties. Un premier bus comportant les M bits de poids forts entre dans un premier module de retard 71. Un deuxième bus comportant les N-M bits de poids faibles entre dans le premier modulateur sigma-delta 72. Le module de retard 71 compense le retard introduit par le modulateur sigma-delta pour le traitement des N-M bits de poids faibles. La sortie du modulateur sigma-delta 72 est additionnée à la sortie du module à retard 71 par un premier additionneur 73. De même, le signal fourni par les moyens de génération de signal aléatoire 54 étant codé sur N bits, le bus de sortie de ces moyens est divisé en deux parties. Un premier bus comportant les M bits de poids forts du signal de bruit entre dans un deuxième module de retard 81. Un deuxième bus comportant les N-M bits de poids faibles du signal utile entre dans le deuxième modulateur sigma-delta 82. Le module de retard 81 compense le retard introduit par le modulateur sigma-delta pour le traitement des N-M bits de poids faibles. La sortie du deuxième modulateur sigma-delta 82 est additionnée à la sortie du deuxième module de retard 81 par un deuxième additionneur 83. Le résultat des additions, en sortie des premier et deuxième additionneurs 73, 83, codé sur M bits, est additionné par un troisième additionneur 84. Le résultat de l'addition, fourni par ce dernier et codé par exemple sur M+1 bits, est converti en un signal analogique par le convertisseur numérique-analogique 53. Dans cet arrangement, il est nécessaire de choisir l'amplitude du signal utile et du signal de bruit de façon à ce que les additions 73, 83 ne génèrent pas de débordements. Comme cela a été indiqué précédemment, un intérêt d'un mode de réalisation selon la figure 8 réside notamment dans le fait qu'il permet un gain en terme de matériel dans le cas où le signal aléatoire est généré par calcul et enregistré par exemple dans une mémoire à lecture seule.

Cela permet notamment d'économiser le matériel nécessaire pour les deuxième modulateur sigma-delta 82, retard 81 et additionneur 83, car l'action de cet ensemble est intégré dans les moyens de calcul.

En sortie du convertisseur numérique-analogique, dans les modes de réalisation d'un système de conversion selon les figures 5, 7 ou 8, le signal analogique est filtré, par un filtre non représenté, afin d'éliminer du signal converti la part due au signal aléatoire. Ce filtrage du signal aléatoire est d'autant plus aisé que ce signal est parfaitement localisé et n'empiète pas sur la bande des signaux utiles.

La figure 9 présente un exemple d'application du procédé selon l'invention pour un système de conversion analogique-numérique. Dans ce cas, le signal utile x(t) et le signal aléatoire s(t) sont des signaux analogiques. Ces deux signaux sont additionnés par un additionneur analogique 91. Le signal somme x(t) + s(t) est présent à l'entrée d'un convertisseur analogique-numérique 92 dont la sortie est par exemple codée sur N bits. Le signal aléatoire possède par exemple les mêmes caractéristiques que celui décrit relativement à la figure 6.

Plusieurs solutions peuvent être envisagées en ce qui concerne un dispositif pour la mise en oeuvre du procédé selon l'invention. Un calculateur peut permettre par simulation de calculer la suite de transformations à appliquer à un bruit b(t), par exemple blanc, pour obtenir le signal aléatoire souhaité s(t). Ce calculateur exécute en fait les différentes étapes 1, 2, 3, 4 du procédé selon l'invention, en répétant éventuellement une ou plusieurs fois les troisième et quatrième étapes 3, 4, pour obtenir une suite d'échantillons, selon une enveloppe spectrale H(f) et un histogramme f prédéterminés. Cette suite d'échantillons est par exemple implantée dans une mémoire qui peut être lue cycliquement ou non par exemple par un microprocesseur. Les adresses des échantillons dans la mémoire sont utilisées ensuite pour lire la valeur de ces échantillons et générer le signal aléatoire. Si plusieurs signaux aléatoires sont envisagés, la mémoire peut par exemple contenir plusieurs suites d'échantillons différentes.

La figure 10 illustre, par un synoptique, un autre exemple de réalisation possible pour la mise en oeuvre du procédé selon l'invention. Il comporte des moyens 101 de génération d'un bruit, par exemple d'un bruit blanc équiprobable b(t). Ces moyens sont par exemple constitués d'un générateur pseudo-aléatoire. La sortie de ces moyens 101 est reliée à l'entrée d'un filtre 102 qui a pour réponse impulsionnelle la fonction h(t) égale à la transformée de Fourier de la fonction H(f) qui est l'enveloppe spectrale à obtenir. Le bruit b(t) est ainsi filtré par ce filtre 102. La sortie de ce dernier est reliée à l'entrée d'un élément non-linéaire 103. Cet élément comporte notamment des moyens de calcul qui appliquent au signal x, présent à son entrée, la relation (1) de façon à obtenir le signal y défini par cette relation et illustré par la figure 2. Ces moyens de calculs sont par exemple à base de processeurs de traitement du signal. L'élément non-linéaire 103 comporte par exemple par ailleurs une mémoire contenant l'histogramme f(y) à obtenir ainsi qu'un ou plusieurs coefficients $\alpha$ fonction du signal y(t) à obtenir. Enfin, il comporte des moyens de création de l'histogramme P(x) du signal d'entrée x(t). Ces moyens sont par exemple à base de microprocesseur et de mémoire vive intégrée ou non au processeur. La sortie de l'élément non-linéaire 103 est reliée à l'entrée d'un deuxième filtre 104 de réponse impulsionnelle w(t) telle que définie relativement à la figure 3. Ce filtre comporte des moyens de calcul qui réalisent la transformée de Fourier 32 du signal y(t) présent à son entrée, puis qui calculent le module et effectuent par exemple le lissage et la normalisation du signal spectral obtenu pour délivrer le signal $Y_2(f)$. Les moyens de calcul du filtre 104 effectuent par ailleurs la division de H(f) par $Y_2(f)$, H(f) étant l'enveloppe spectrale à obtenir pour le signal aléatoire. A cet effet, le filtre 104, comporte par exemple une mémoire qui contient cette enveloppe ainsi par exemple que le coefficient $\beta$ permettant de définir l'amplitude du signal de sortie s(t). Le filtre 104 comporte par ailleurs des moyens de transformée de Fourier inverse qui sont appliqués au résultat de la division $H(f) / Y_2(f)$ pour donner, au coefficient $\beta$ près, le signal impulsionnel w(t). Le signal de sortie s(t) du deuxième filtre 104 représente le signal aléatoire. Cependant, comme cela a été expliqué précédemment, des itérations des troisième et quatrième étapes du procédé selon l'invention peuvent être nécessaires pour obtenir un signal aléatoire qui réponde aux critères fixés, en ce qui concerne l'enveloppe spectrale de ce signal et l'histogramme de ses amplitudes. A cet effet, la sortie du deuxième filtre 104 est reliée à l'entrée de moyens 105 de validation du signal aléatoire généré par le dispositif selon l'invention. Des critères de validation sont pour cela mémorisés dans ces moyens 105. Tant que le signal s(t) présent en sortie du deuxième filtre 104 ne répond pas à ces critères, les moyens de validation 105 ré-acheminent le signal s(t) en entrée de l'élément non-linéaire 103. A cet effet, une sortie des moyens de validation 105 est reliée à l'entrée de l'élément non-linéaire. Lorsque le signal s(t) répond aux critères de validation, il est acheminé vers une deuxième sortie des moyens de validation 105, cette sortie délivrant le signal aléatoire. Plusieurs critères sont envisageables comme cela a été indiqué précédemment.

Si un critère retenu est le nombre de répétitions du traitement du signal à travers l'élément non-linéaire 103 et le deuxième filtre 104, les moyens de validation 105 comportent par exemple un compteur qui détermine le nombre de fois où le signal s(t) est ré-acheminé vers l'élément non-linéaire 103. Lorsque le compteur indique le nombre d'itérations déterminé, les moyens de validation 105 aiguillent le signal s(t) vers leur deuxième sortie. L'aiguillage peut par exemple se faire au moyen de commutateurs numériques, par l'intermédiaire d'un microprocesseur ou non.

Si un critère de convergence est retenu, les moyens de validation 105 comportent par exemple un comparateur, numérique ou analogique selon les cas, qui compare l'histogramme et le spectre du signal s(t) à des histogrammes et des spectres de signaux $s_0(t)$ de référence mémorisés. Lorsque le résultat de la comparaison est dans une fourchette prédéterminée et mémorisée qui correspond au critère de convergence, les moyens de validation 105 aiguillent le signal s(t) vers leur deuxième sortie pour délivrer le signal aléatoire.

Le dispositif selon l'invention tel que décrit relativement à la figure 10 peut par exemple être utilisé comme moyen de génération d'un signal aléatoire 54 dans les systèmes de conversion numérique-analogique relatifs aux figures 5, 7 et 8. Dans le cas d'un système de conversion analogique-numérique comme pour la figure 9, un convertisseur numérique-analogique peut être adjoint en sortie du dispositif, plus précisément en sortie des moyens de validation 105 pour fournir un signal aléatoire analogique.

Dans le cas de la création d'un signal aléatoire analogique, les différentes étapes peuvent aussi être réalisées par des moyens analogiques. En particulier, les fonctions à réaliser sont précalculées par des moyens de simulation, puis sont réalisées par des circuits analogiques à base notamment de condensateurs, d'inductances, d'amplificateurs opérationnels et de diodes, de façon classique. S'il est nécessaire de répéter plusieurs fois les étapes 3 et 4, les fonctions sont précalculées pour chacune des étapes à réaliser, par exemple pour chacune des étapes 1, 2, 3, 4, 3a, 4a telles qu'illustrées par la figure 4. Chaque fonction précalculée est alors exécutée par des circuits analogiques, dans lesquels passe successivement un signal.

Les applications de l'invention décrites précédemment concernent les domaines de la conversion numérique-analogique ou analogique-numérique. L'invention peut néanmoins s'appliquer dans de nombreux autres domaines utilisant un signal aléatoire dont on souhaite fixer à la fois l'enveloppe spectrale et l'histogramme des amplitudes. Par ailleurs, l'invention est économique et simple à mettre en oeuvre. En effet, pour une application donnée, par exemple un synthétiseur numérique, elle ne nécessite pas ou peu de composants supplémentaires dans la mesure où toutes les fonctions de l'invention peuvent être réalisées par des circuits déjà utilisés pour l'application, tels que des processeurs standards ou de traitement du signal, des mémoires ou des interfaces. La mise en oeuvre peut être alors essentiellement logicielle.

## Revendications

1. Procédé de génération d'un signal aléatoire s(t), comportant :

   - une première étape (1) de génération d'un bruit b(t),
   **Caractérisé en ce qu'**il comporte en outre :
   - une deuxième étape (2) de filtrage du bruit pour obtenir un signal x(t) possédant une enveloppe spectrale prédéterminée à obtenir pour ledit signal aléatoire, l'enveloppe spectrale prédéterminée étant définie par la fonction H(f) où f est la fréquence, en faisant passer le bruit b(t) dans un filtre qui a pour réponse impulsionnelle la fonction h(t) égale à la transformée de Fourier inverse de la fonction H(f) ;
   - une troisième étape (3) ou une fonction non-linéaire g est appliquée au signal x(t) de façon à donner un signal y(t) s'approchant d'un histogramme des amplitudes f(y) prédéterminé à obtenir pour ledit signal aléatoire, la fonction g étant définie par la relation suivante :

   $$y = g(x) = \alpha \int_{0}^{x} \frac{P(u)}{f(u)} du$$

   où la fonction P est l'histogramme du signal x(t) auquel s'applique la troisième étape et $\alpha$ est un coefficient de réglage de l'amplitude fonction de l'amplitude souhaitée pour le signal y(t) ;
   - une quatrième étape (4) où un filtrage de réponse impulsionnelle w(t) est appliqué au signal y(t) pour corriger son enveloppe spectrale et obtenir un signal de sortie s(t) présentant l'enveloppe spectrale H(f) prédéterminée, la réponse impulsionnelle w(t) étant la transformée de Fourier inverse d'une fonction W de la fréquence W(f) qui est, au coefficient $\beta$ près, la division de la fonction H(f) par le module $Y_2(f)$ de la transformée de Fourier du signal y(t), le signal de sortie s(t) étant ledit signal aléatoire, le coefficient $\beta$ permettant de définir l'amplitude du signal aléatoire s(t).

2. Procédé selon la revendication 1, **caractérisé en ce que** les troisième et quatrième étapes sont appliquées plusieurs fois au signal de sortie s(t) pour affiner la convergence vers l'histogramme et l'enveloppe spectrale prédéterminés.

3. Procédé selon l'une quelconque des revendications précédentes, **caractérisé en ce que** l'histogramme prédéterminé est rectangulaire et l'enveloppe spectrale est à bande limitée.

4. Procédé selon l'une quelconque des revendications 1 ou 2, **caractérisé en ce que** l'histogramme prédéterminé est presque rectangulaire et l'enveloppe spectrale est à bande limitée.

5. Procédé selon la revendication 4, **caractérisé en ce que** les bords de l'histogramme sont à dérivées continues.

6. Procédé selon l'une quelconque des revendications précédentes, **caractérisé en ce que** le bruit b(t) de la première étape (1) est un bruit blanc.

7. Procédé selon l'une quelconque des revendications précédentes, **caractérisé en ce que**, dans la troisième étape (3), l'application de la fonction g est suivie et/ou précédée d'une fonction de lissage (23).

8. Procédé selon l'une quelconque des revendications précédentes, **caractérisé en ce que**, dans la quatrième étape (4), le module $Y_2(f)$ est normalisé.

9. Procédé selon l'une quelconque des revendications précédentes, **caractérisé en ce que**, dans la quatrième étape (4), un lissage est appliqué au module $Y_2(f)$.

10. Dispositif pour la mise en oeuvre du procédé selon l'une quelconque des revendications 1 à 9, comportant :

   - des moyens (101) de génération d'un bruit ;
   ledit dispositif **caractérisé en ce qu'**il comporte en outre :
   - un filtre (102) relié à la sortie des moyens de génération de bruit, ayant pour réponse impulsionnelle la fonction h(t) égale à la transformée de Fourier de la fonction H(f) et ayant pour sortie le signal x(t), une enveloppe spectrale prédéterminée à obtenir pour le signal aléatoire s(t) étant définie par la fonction H(f) où f est la fréquence;
   - un élément non-linéaire (103) de fonction non-linéaire g relié à la sortie du filtre (102), comportant des moyens de calcul pour appliquer au signal x(t), présent à son entrée, la fonction non-linéaire g définie par :

$$y = g(x) = \alpha \int_0^x \frac{P(u)}{f(u)} du$$

   l'élément non-linéaire (103), comportant en mémoire un histogramme des amplitudes f(y) prédéterminé à obtenir pour le signal aléatoire x(b) et le coefficient $\alpha$ qui est un coefficient de réglage de l'amplitude fonction de l'amplitude souhaitée pour le signal y(t), et comportant des moyens de calcul de l'histogramme P(x) du signal x(t) présent à son entrée ;
   - un deuxième filtre (104), relié à la sortie de l'élément non-linéaire (103), de réponse impulsionnelle w(t), ce filtre comportant des moyens de calcul (31, 32, 33) qui réalisent la transformée de Fourier du signal y(t) présent à son entrée, puis qui calculent le module du signal spectral obtenu pour délivrer le signal $Y_2(f)$, les moyens de calcul (31, 32, 33) du filtre (104) effectuant par ailleurs la division de H(f) par $Y_2(f)$, le dispositif comportant des moyens de mémorisation (34) de H(f) et d'un coefficient $\beta$, le filtre (104) comportant par ailleurs des moyens (35) de transformée de Fourier inverse qui sont appliqués au résultat de la division H(f) / $Y_2(f)$ pour donner, au coefficient $\beta$ près, le signal impulsionnel w(t), le signal de sortie s(t) du deuxième filtre (104) étant le signal aléatoires (t) le coefficient $\beta$ permettant de définir l'amplitude du signal aléatoire.

11. Dispositif selon la revendication 10, **caractérisé en ce que** la sortie du deuxième filtre (104) comporte des moyens (105) de validation du signal aléatoire s(t), des critères de validation étant mémorisés dans ces moyens (105), et **en ce que**, tant que le signal s(t) présent en sortie du deuxième filtre (104) ne répond pas à ces critères, les moyens de validation (105) ré-acheminent le signal s(t) en entrée de l'élément non-linéaire (103) par une sortie reliée à l'entrée de cet élément non-linéaire.

12. Dispositif selon la revendication 11, **caractérisé en ce que** si un critère retenu est le nombre de répétitions du traitement du signal à travers l'élément non-linéaire (103) et le deuxième filtre (104), les moyens de validation (105) comportent un compteur qui détermine le nombre de fois où le signal s(t) est ré-acheminé vers l'élément non-linéaire (103).

13. Dispositif selon la revendication 11, **caractérisé en ce que** si un critère de convergence est retenu, les moyens de validation (105) comportent un comparateur qui compare l'histogramme et le spectre du signal s(t) par rapport à un histogramme et un spectre de référence $s_0(t)$ mémorisés.

**14.** Système de conversion numérique-analogique comportant un dispositif générant un
signal aléatoire s(t) selon l'une quelconque des revendications 10 à 13, où un signal numérique utile, codé sur (N-1) bits, doit être converti en un signal analogique, comportant:

- un additionneur (51), additionnant au signal utile le signal aléatoire s(t) codé sur (N-1) bits, le résultat de l'addition, codé sur N bits, étant tronqué à M bits.

**15.** Système selon la revendication 14,
comportant en outre :

- en sortie du premier additionneur (51), un premier bus comportant les M bits de poids forts entrant dans un module de retard (71) ;
- en sortie du premier additionneur (51), un deuxième bus comportant les N-M bits de poids faibles entrant dans le modulateur sigma-delta (72), le module de retard (71) compensant le retard introduit par le modulateur sigma-delta pour le traitement des N-M bits de poids faibles, la sortie du modulateur sigma-delta (72) étant additionnée à la sortie du module à retard (71) par un deuxième additionneur (73), le résultat de l'addition, codé sur M bits, étant converti en signal analogique par un convertisseur numérique-analogique (53).

**16.** Système selon l'une quelconque des revendications 14 ou 15, constituant un synthétiseur numérique.

**Claims**

**1.** A process for generating a random signal s(t), comprising:

a first step (1) for generating a noise b(t),
**characterised in that** it further comprises:

- a second noise filtering step (2) to obtain a signal x(t) having a predetermined spectral envelope to be obtained for said random signal, the predetermined spectral envelope being defined by the function H(f), where f is the frequency, by passing the noise b(t) through a filter having as the pulse response the function h(t) equal to the inverse Fourier transform of the function H(f);
- a third step (3) wherein a non-linear function g is applied to the signal x(t) in order to provide a signal y(t) similar to a predetermined amplitudes histogram f(y) to be obtained for said random signal, the function g being defined by the following relation:

$$y = g(x) = \alpha \int_{0}^{x} \frac{P(u)}{f(u)} du$$

where the function P is the histogram of the signal x(t) to which the third step is applied, and $\alpha$ is an amplitude adjustment coefficient according to the required amplitude for the signal y(t);

- a fourth step (4) wherein pulse response filtering w(t) is applied to the signal y(t) to correct its spectral envelope and obtain an output signal s(t) having the predetermined spectral envelope H(f), the pulse response w(t) being the inverse Fourier transform of a function W of the frequency W(f) which is, up to the coefficient $\beta$, a division of the function H(f) by the modulus $Y_2(f)$ of the Fourier transform of the signal y(t), the output signal s(t) being said random signal, the coefficient $\beta$ allowing the amplitude of the random signal s(t) to be defined.

**2.** The process according to claim 1, **characterised in that** the third and fourth steps are applied to the output signal s(t) several times in order to refine convergence to the predetermined histogram and the spectral envelope.

**3.** The process according to any one of the previous claims, **characterised in that** the predetermined histogram is rectangular and the spectral envelope has a limited band.

**4.** The process according to any one of claims 1 to 2, **characterised in that** the predetermined histogram is quasi rectangular and the spectral envelope has a limited band.

**5.** The process according to claim 4, **characterised in that** the boundaries of the histogram have continuous derivatives.

**6.** The process according to any one of the previous claims, **characterised in that** the noise b(t) in the first step (1) is white noise.

**7.** The process according to any one of the previous claims, **characterised in that** in the third step (3), the application of the function g is followed and/or preceded by a smoothing function (23).

**8.** The process according to any one of the previous claims, **characterised in that** in the fourth step (4), the modulus $Y_2(f)$ is normalised.

**9.** The process according to any one of the previous claims, **characterised in that** in the fourth step (4), smoothing is applied to modulus $Y_2(f)$.

**10.** A device for implementing the process according to any one of claims 1 to 9, comprising:

- noise generating means (101);
said device being **characterised in that** it further comprises:
- a filter (102) connected to the output of the noise generating means, having as the pulse response the function H(t) equal to the Fourier transform of the function H(f) and having the signal x(t) as an output, with a predetermined spectral envelope to be obtained for the random signal s(t) being defined by the function H(f), where f is the frequency;
- a non-linear element (103) having a non-linear function g connected to the output of the filter (102), including computation means in order to apply to the signal x(t) present at the input the non-linear function g defined by:

$$y = g(x) = \alpha \int_0^x \frac{P(u)}{f(u)} du$$

- the non-linear element (103) storing a predetermined amplitudes histogram f(y) to be obtained for the random signal x(b) and the coefficient $\alpha$, which is an amplitude adjustment coefficient as a function of the required amplitude for the signal y(t), and including means for computing the histogram P(x) of the signal x(t) present at its input;
- a second filter (104), connected to the output of the non-linear element (103), with a pulse response w(t), this filter including computation means (31, 32, 33) which perform the Fourier transform of the signal y(t) present at the input, and subsequently compute the modulus of the spectral signal obtained to supply the signal $Y_2(f)$, the computation means (31, 32, 33) of the filter (104) further performing a division of H(f) by $Y_2(f)$, the device comprising means for storing (34) H(f) and a coefficient $\beta$, the filter (104) further comprising inverse Fourier transform means (35) which are applied to the result of the H(f) / $Y_2(f)$ division to provide, up to the coefficient $\beta$, the pulse signal w(t), the output signal s(t) of the second filter being the random signal s(t), the coefficient $\beta$ allowing the amplitude of the random signal to be defined.

**11.** The device according to claim 10, **characterised in that** the output of the second filter (104) includes means (105) for validating the random signal s(t), the validation criteria being stored in these means (105), and **in that**, as long as the signal s(t) present at the output of the second filter (104) does not fulfil these criteria, the validation means (105) forward the signal s(t) to the input of the non-linear element (103) via an output connected to the input of this non-linear element.

**12.** The device according to claim 11, **characterised in that** if a selected criterion is the number of repetitions of signal processing across the non-linear element (103) and the second filter (104), the validation means (105) include a counter which determines the number of times the signal s(t) is forwarded to the non-linear element (103).

**13.** The device according to claim 11, **characterised in that** if a convergence criterion is selected the validation means (105) include a comparator which compares the histogram and the signal s(t) spectrum relative to a stored histogram and reference spectrum so(t).

14. A digital-analogue conversion system comprising a device generating a random signal s(t) according to any one of claims 10 to 13, wherein a wanted digital signal, coded on (N-1) bits, must be converted into an analogue signal, comprising:

- an adder (51) adding the random signal s(t) coded on (N-1) bits to the wanted signal, the result of the addition, coded in N bits, being truncated to M bits.

15. The system according to claim 14, further comprising:

- at the output of the first adder (51), a first bus comprising the M high order bits input into a delay module (71);
- at the output of the first adder (51), a second bus including the N-M low order bits input into a sigma-delta modulator (72), the delay module (71) compensating for the delay introduced by the sigma-delta modulator for processing the N-M low order bits, the output of the sigma-delta modulator (72) being added to the output of the delay module (71) by a second adder (73), the result of the addition, coded on M bits, being converted into an analogue signal by a digital-analogue converter (53).

16. The system according to any one of claims 14 to 15, constituting a digital synthetiser.

**Patentansprüche**

1. Verfahren zum Erzeugen eines Zufallssignals s(t), das Folgendes beinhaltet:

- einen ersten Schritt (1) des Erzeugens eines Rauschens b(t),
**dadurch gekennzeichnet, dass** es ferner Folgendes beinhaltet:
- einen zweiten Rauschfilterungsschritt (2) zum Erhalten eines Signals x(t) mit einer vorbestimmten Spektralhüllkurve, die für das Zufallssignal erhalten werden soll, wobei die vorbestimmte Spektralhüllkurve durch die Funktion H(f) definiert wird, wobei f die Frequenz ist, durch Leiten des Rauschens b(t) durch ein Filter mit der Funktion h(t) als Impulsantwort, die gleich der Fourier-Umkehrtransformation der Funktion H(f) ist;
- einen dritten Schritt (3), wobei eine nichtlineare Funktion g auf das Signal x(t) angewendet wird, um ein Signal y(t) bereitzustellen, das einem vorbestimmten Amplitudenhistogramm f(y) nahekommt, das für das Zufallssignal erhalten werden soll, wobei die Funktion g durch die folgende Beziehung definiert wird:

$$y = g(x) = \alpha \int_{0}^{x} \frac{P(u)}{f(u)} du$$

wobei die Function P das Histogramm des Signals x(t) ist, auf das der dritte Schritt angewendet wird, und $\alpha$ ein Amplitudenjustierkoeffizient gemäß der gewünschten Amplitude für das Signal y(t) ist;
- einen vierten Schritt (4), wobei eine Impulsantwortfilterung w(t) auf das Signal y(t) angewendet wird, um seine Spektralhüllkurve zu korrigieren und ein Ausgangssignal s(t) mit der vorbestimmten Spektralhüllkurve H(f) zu erhalten, wobei die Impulsantwort w(t) die Fourier-Umkehrtransformation einer Funktion W mit der Frequenz W(f) ist, die eine Division der Funktion H(f) durch das Modul $Y_2(f)$ der Fourier-Transformation des Signals y(t) bis auf den Koeffizienten $\beta$ ist, wobei das Ausgangssignal s(t) das Zufallssignal ist, wobei der Koeffizient $\beta$ die Definition der Amplitude des Zufallssignals s(t) zulässt.

2. Verfahren nach Anspruch 1, **dadurch gekennzeichnet, dass** der dritte und der vierte Schritt mehrere Male auf das Ausgangssignal s(t) angewendet werden, um die Konvergenz zu dem/der vorbestimmten Histogramm und Spektralhüllkurve zu verfeinern.

3. Verfahren nach einem der vorherigen Ansprüche, **dadurch gekennzeichnet, dass** das vorbestimmte Histogramm rechteckig ist und die Spektralhüllkurve ein begrenztes Band hat.

4. Verfahren nach Anspruch 1 oder 2, **dadurch gekennzeichnet, dass** das vorbestimmte Histogramm fast rechteckig ist und die Spektralhüllkurve ein begrenztes Band hat.

5. Verfahren nach Anspruch 4, **dadurch gekennzeichnet, dass** die Ränder des Histogramms kontinuierliche Ableitungen haben.

6. Verfahren nach einem der vorherigen Ansprüche, **dadurch gekennzeichnet, dass** das Rauschen b(t) aus dem ersten Schritt (1) weißes Rauschen ist.

7. Verfahren nach einem der vorherigen Ansprüche, **dadurch gekennzeichnet, dass** im dritten Schritt (3) der Funktion g eine Glättungsfunktion (23) folgt und/oder vorangeht.

8. Verfahren nach einem der vorherigen Ansprüche, **dadurch gekennzeichnet, dass** im vierten Schritt (4) das Modul $Y_2(f)$ normalisiert wird.

9. Verfahren nach einem der vorherigen Ansprüche, **dadurch gekennzeichnet, dass** im vierten Schritt (4) Glättung auf das Modul $Y_2(f)$ angewendet wird.

10. Vorrichtung zum Implementieren des Verfahrens nach einem der Ansprüche 1 bis 9, die Folgendes umfasst:

    - Rauscherzeugungsmittel (101);
    wobei die Vorrichtung **dadurch gekennzeichnet ist, dass** sie ferner Folgendes umfasst:
    - ein Filter (102), das mit dem Ausgang der Rauscherzeugungsmittel verbunden ist und als Impulsantwort die Funktion h(t) hat, die gleich der Fourier-Transformation der Funktion H(f) ist und das Signal x(t) als Ausgang hat, wobei eine für das Zufallssignal s(t) zu erhaltende vorbestimmte Spektralhüllkurve durch die Funktion H(f) definiert wird, wobei f die Frequenz ist;
    - ein nichtlineares Element (103) mit einer nichtlinearen Funktion g, die mit dem Ausgang des Filters (102) verbunden ist, mit Rechenmitteln, um auf das an seinem Eingang anliegende Signal x(t) die nichtlineare Funktion g anzuwenden, die definiert wird durch:

    $$y = g(x) = \alpha \int_0^x \frac{P(u)}{f(u)} du$$

    - wobei das nichtlineare Element (103) im Speicher ein vorbestimmtes Amplitudenhistogramn f(y) enthält, das für das Zufallssignal x(b) und den Koeffizienten $\alpha$ erhalten werden soll, der ein Amplitudenjustierkoeffizient gemäß der gewünschten Amplitude für das Signal y(t) ist, und Mittel zum Berechnen des Histogramms P(x) des an seinem Eingang anliegenden Signals x(t) enthält;
    - ein zweites Filter (104), das mit dem Ausgang des nichtlinearen Elementes (103) verbunden ist, mit einer Impulsantwort w(t), wobei dieses Filter Rechenmittel (31, 32, 33) beinhaltet, die die Fourier-Transformation des an seinem Eingang anliegenden Signals y(t) durchführen und dann das Modul des erhaltenen Spektralsignals berechnen, um das Signal $Y_2(f)$ zu liefern, wobei die Rechenmittel (31, 32, 33) des Filters (104) ferner eine Division von H(f) durch $Y_2(f)$ durchführen, wobei die Vorrichtung Speichermittel (34) für H(f) und einen Koeffizienten $\beta$ umfasst, wobei das Filter (104) ferner Fourier-Umkehrtransformationsmittel (35) umfasst, die auf das Ergebnis der Division H(f) / $Y_2(f)$ angewendet werden, um das Impulssignal w(t) bis auf den Koeffizienten $\beta$ bereitzustellen, wobei das Ausgangssignal s(t) des zweiten Filters das Zufallssignal s(t) ist, wobei der Koeffizient $\beta$ die Definition der Amplitude des Zufallssignals zulässt.

11. Vorrichtung nach Anspruch 10, **dadurch gekennzeichnet, dass** der Ausgang des zweiten Filters (104) Mittel (105) zum Validieren des Zufallssignals s(t) aufweist, wobei die Validierungskriterien in diesen Mitteln (105) gespeichert sind, und dadurch, dass, solange das am Ausgang des zweiten Filters (104) anliegende Signal s(t) diese Kriterien nicht erfüllt, die Validierungsmittel (105) das Signal s(t) über einen mit dem Eingang des nichtlinearen Elementes verbundenen Ausgang zum Eingang des nichtlinearen Elementes (103) weiterleiten.

12. Vorrichtung nach Anspruch 11, **dadurch gekennzeichnet, dass**, wenn ein gespeichertes Kriterium die Zahl der Wiederholungen der Signalverarbeitung über das nichtineare Element (103) und das zweite Filter (104) ist, die Validierungsmittel (105) einen Zähler enthalten, der ermittelt, wie oft das Signal s(t) zu dem nichtlinearen Element (103) weitergeleitet wird.

**13.** Vorrichtung nach Anspruch 11, **dadurch gekennzeichnet, dass**, wenn ein Konvergenzkriterium gespeichert ist, die Validierungsmittel (105) einen Komparator enthalten, der das Histogramm und das Spektrum des Signals s(t) mit einem gespeicherten Histogramm und Referenzspektrum $_{So}$(t) vergleicht.

**14.** Digital-Analog-Umwandlungssystem, das eine ein Zufallssignal s(t) erzeugende Vorrichtung nach einem der Ansprüche 10 bis 13 umfasst, wobei ein digitales Nutzsignal, auf (N-1) Bits codiert, in ein Analogsignal umgewandelt werden muss, umfassend:

- ein Addierglied (51), das das auf (N-1) Bits codierte Zufallssignal s(t) zu dem Nutzsignal addiert, wobei das Ergebnis der Addition, auf N Bits codiert, auf M Bits verkürzt wird.

**15.** System nach Anspruch 14, das ferner Folgendes umfasst:

- am Ausgang des ersten Addierglieds (51) einen ersten Bus, der die M hochwertigen Bits umfasst, die in ein Verzögerungsmodul (71) eingegeben werden;
- am Ausgang des ersten Addierglieds (51) einen zweiten Bus, der die N-M niederwertigen Bits umfasst, die in einen Sigma-Delta-Modulator (72) eingegeben werden, wobei das Verzögerungsmodul (71) die vom Sigma-Delta-Modulator zum Verarbeiten der N-M niederwertigen Bits verursachte Verzögerung kompensiert, wobei der Ausgang des Sigma-Delta-Modulators (72) von einem zweiten Addierglied (73) zum Ausgang des Verzögerungsmoduls (71) addiert wird, wobei das Ergebnis der Addition, auf M Bits codiert, von einem Analog-Digital-Wandler (53) in ein Analogsignal umgewandelt wird.

**16.** System nach einem der Ansprüche 14 bis 15, das einen digitalen Synthetiser darstellt.

EP 1 110 135 B1

FIG.1

FIG.2a

EP 1 110 135 B1

FIG.2b

FIG.2c

FIG.2d

FIG.2e

$g2(x)$

$x$

$x_0$

0

27'

FIG.2f

EP 1 110 135 B1

```
Y(t) →  ┌──────────────┐         ┌──────────┐         ┌──────────┐         ┌──────────────┐
        │ TRANSFORMÉE  │ Y(2πjf) │  MODULE  │ Y2(f)   │    H     │  W(f)   │ TRANSFORMÉE  │ w(t)
        │     DE       │────────▶│    +     │────────▶│  W = β── │────────▶│     DE       │────▶
        │   FOURIER    │         │ LISSAGE  │         │    Y2    │         │   FOURIER    │
        │      31      │         │    32    │         │    33    │         │   INVERSE    │
        └──────────────┘         └──────────┘         └──────────┘         │      35      │
                                                           ▲               └──────────────┘
                                                           │ H(f)
                                                      ┌──────────┐
                                                      │ ENVELOPPE│ 34
                                                      │SPECTRALE │
                                                      │ À OBTENIR│
                                                      └──────────┘
```

# FIG.3

```
┌─────────┐   ┌─────────┐   ┌─────────┐   ┌─────────┐   ┌─────────┐   ┌─────────┐   ┌─────────┐
│  BRUIT  │   │FILTRAGE │   │  NON-   │   │FILTRAGE │   │  NON-   │   │FILTRAGE │   │  NON-   │
│  BLANC  │ 1 │  PAR    │ 2 │LINÉARITÉ│ 3 │  PAR    │ 4 │LINÉARITÉ│ 3a│  PAR    │ 4a│LINÉARITÉ│ 3b
│ÉQUIPRO- │──▶│  h(t)   │──▶│   g     │──▶│  w(t)   │──▶│   g2    │──▶│  w2(t)  │──▶│   g3    │──▶
│ BABLE   │   │         │   │         │   │         │   │         │   │         │   │         │
└─────────┘   └─────────┘   └─────────┘   └─────────┘   └─────────┘   └─────────┘   └─────────┘
```

# FIG.4

EP 1 110 135 B1

x(t) ──────────► [ + ] ── N bits ──► ┌─────────────┐ ── M bits ──► ┌──────┐ ──────►
                  51    x(t)+s(t)     │ TRONCATURE  │              │ CNA  │
                   ▲                  │  N ──► Mbits │              │      │
                   │ s(t)             │     52      │              │  53  │
            ┌──────┴──────┐          └─────────────┘              └──────┘
            │  GÉNÉRATION │
            │ D'UN SIGNAL │
            │  ALÉATOIRE  │
            │     54      │
            └─────────────┘

**FIG.5**

FIG.6a

FIG.6b

FIG.7

EP 1 110 135 B1

x(t) — M — RETARD 71 — 73 + — M bits — 84 + — M+1bits — CNA 53

N-M

MODULATEUR SIGMA DELTA 72

GÉNÉRATION D'UN SIGNAL ALÉATOIRE 2

s(t) M — RETARD 81 — 83 + — M bits

N-M

MODULATEUR SIGMA DELTA 82

FIG. 8

EP 1 110 135 B1

x(t)

91

+

x(t)+s(t)

92

CAN

N

s(t)

GÉNÉRATION
D'UN SIGNAL
ALÉATOIRE

FIG.9

101

MOYENS DE
GÉNÉRATION D'UN
BRUIT BLANC b(t)

b(t)

102

FILTRE
x(t)=b(t)*h(t)

x(t)

103

ÉLÉMENT
NON-LINÉAIRE
y(t)=g[x(t)]

y(t)

104

FILTRE
s(t)=y(t)*w(t)

s(t)

105

MOYENS
DE
VALIDATION

s(t)

FIG.10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

* EP 0225641 A

* JP 58147226 A, SHIMAZU SEISAKUSHO KK

**Littérature non-brevet citée dans la description**

* *PATENT ABSTRACTS OF JAPAN,* 24 Novembre 1983, vol. 007 (264